# EUROPEAN PATENT APPLICATION

(11) **EP 4 851 236 A1**
(43) Date of publication of application: **09.12.2026**
(21) Application number: 25748369.3
(22) Date of filing: 17.01.2025
(51) Int. Cl.: C08J 11/08, B29B 17/02, C08G 63/16, C08J 11/24

(54) **METHOD FOR RECOVERING POLYESTER AND METHOD FOR MANUFACTURING RECYCLED POLYESTER POLYMER**

(30) Priority: 29.01.2024 JP 2024010648
(71) Applicant: TEIJIN FRONTIER CO., LTD., Osaka-shi, Osaka 530-0005 (JP)
(72) Inventor: KAWASAKI Keita, Osaka-shi, Osaka 530-0005 (JP); TSURUDA Ryo, Osaka-shi, Osaka 530-0005 (JP); SUNOUCHI Satoshi, Osaka-shi, Osaka 530-0005 (JP)
(74) Representative: Carpmaels & Ransford LLP
(86) International application number: PCT/JP2025/001361
(87) International publication number: WO 2025/164373

(57) **Abstract**

Provided is a method for producing a recycled polyester polymer, which is less colored, by a method for recovering a polyester from a fiber product containing a polyester fiber colored with a dye and an acrylic fiber. The method includes: a solvent contact step of bringing the fiber product into contact with an aprotic polar solvent at a temperature of 30°C to 160°C; and an acrylic fiber and dye removal step of removing, from the polyester fiber, the solvent and the acrylic fiber and the dye dissolved in the solvent from the fiber product to obtain the polyester.

## Description

### Technical Field

The present invention relates to a method for recovering a polyester from a fiber product containing a polyester fiber colored with a dye and an acrylic fiber, and a method for producing a recycled polyester polymer for producing a polyester polymer by depolymerizing and further repolymerizing the polyester.

### Background Art

The polyester is widely used as a fiber product due to its excellent properties, but the effective utilization of the used polyester fiber product is a major issue including environmental problems.

As a main processing method for effective utilization after use, material recycling, thermal recycling, and chemical recycling have been studied, and among them, the chemical recycling in which a polyester polymer is depolymerized to a raw material and then repolymerized is excellent as recycling of a closed loop from the viewpoint of less deterioration in quality accompanying regeneration. Among them, a method using an intermediate capable of directly performing a polycondensation reaction to produce a regenerated polyester is also an excellent method from the viewpoint of energy consumption.

However, the regenerated polyester polymer obtained in this way has a problem that coloration cannot be sufficiently limited.

In particular, when the polyester fiber product contains different kinds of polymers such as an acrylic fiber or is a dyed product, it is difficult to limit coloration and efficiently recover the polyester.

For example, in Patent Literature 1, in order to remove a coloring factor substance, it has been attempted to perform an adsorption treatment in which the coloring factor substance is brought into contact with an adsorbent, a decomposition treatment in which the coloring factor substance is decomposed with a decomposer, and a reduction treatment in which the coloring factor substance is reduced with a reducing agent after obtaining an intermediate after depolymerization. However, in the above method, although the coloring factor substance such as a dye, which is clearly mixed in the polymer, is removed to some extent, it is not possible to obtain a polyester polymer in which coloration is limited to the same level as that of a polyester polymer according to a production method of general production not using a recycled raw material.

According to the studies by the present inventors, it is difficult to separate a fiber product, which is formed of a fiber mainly composed of a polyester and contains an acrylic fiber, in steps before and after depolymerization, and a hue of a chemically recycled polyester after repolymerization is often brown.
Patent Literature 1: JP2008-88096A

### Summary of Invention

### Technical Problem

An object of the present invention is to provide a method for recovering a polyester from a fiber product containing a polyester fiber colored with a dye and an acrylic fiber, and a method for producing a recycled polyester polymer with less coloration by depolymerizing and further repolymerizing the polyester.

### Solution to Problem

The present invention is a method for recovering a polyester from a fiber product containing a polyester fiber colored with a dye and an acrylic fiber. The method includes: a solvent contact step of bringing the fiber product into contact with an aprotic polar solvent at a temperature of 30°C to 160°C; and an acrylic fiber and dye removal step of removing, from the polyester fiber, the solvent and the acrylic fiber and the dye dissolved in the solvent from the fiber product to obtain the polyester.

The present invention is a method for producing a recycled polyester polymer from a fiber product containing a polyester fiber colored with a dye and an acrylic fiber. The method includes: a depolymerization step of subjecting the polyester recovered by the method described above to a depolymerization reaction in an alkylene glycol to obtain a depolymerization reaction product; and a repolymerization step of subjecting the depolymerization reaction product to a polycondensation reaction to obtain a polyester polymer.

### Advantageous Effects of Invention

According to the present invention, it is possible to provide a method for recovering a polyester from a fiber product containing a polyester fiber colored with a dye and an acrylic fiber, and a method for producing a recycled polyester polymer with less coloration by depolymerizing and further repolymerizing the polyester.

### Description of Embodiments

Hereinafter, the present invention will be described in detail.

### [Fiber Product]

In the present invention, the fiber product is a fiber product containing a polyester fiber colored with a dye and an acrylic fiber. The fiber product is mainly formed of a fiber composed of a polyester. Here, "mainly formed of a fiber composed of a polyester" means that the fiber composed of the polyester is the largest amount of fiber among the fibers constituting the fiber product. The content of the fiber composed of the polyester is preferably 50% by weight or more, more preferably 80% by weight or more, based on a weight of the fiber product.

Examples of the fiber product include knit garments such as sweaters, outdoor wear, and sportswear, inner cotton of garments and bedding, fluff, wool, and carpet. The fiber product of the present invention also corresponds to an intermediate product such as a woven or knitted fabric, a nonwoven fabric, or a padding cotton, an end material generated in the production process, and a product discarded after use or in stock.

### [Polyester Fiber]

The polyester of the polyester fiber is a polycondensate synthesized by dehydration condensation of a polycarboxylic acid and a polyalcohol to form an ester bond. The polyester is a polymer having an ester bond, and is generally classified into aliphatic polyesters, semi-aromatic polyesters, and wholly aromatic polyesters.

The polycarboxylic acid constituting the polyester is preferably a dicarboxylic acid or an ester-forming derivative thereof. As the dicarboxylic acid, an aromatic dicarboxylic acid such as terephthalic acid or 2,6-naphthalene dicarboxylic acid is preferably used.

As the polyalcohol, a diol is preferably used. Specifically, an aliphatic glycol having a carbon number of 2 to 20 is used. Examples of the aliphatic glycol include ethylene glycol (hereinafter, may be abbreviated as EG), 1,3-propanediol, propylene glycol, 1,4-butanediol, 1,5-pentanediol, and 1,6-hexanediol. The aliphatic glycol may be an aliphatic glycol having a carbon number of 3 to 30, and specific examples thereof include a 1,4-cyclohexane dimethanol.

The polyester is preferably polyalkylene terephthalate, and more preferably polyethylene terephthalate, polytrimethylene terephthalate, and polybutylene terephthalate.

In the present invention, all or at least a part of the polyester fiber is colored with a dye. The dye is preferably a disperse dye. Among the disperse dyes, a disperse dye containing a nitrogen atom is preferable. A particularly preferable dye is an azo-based disperse dye.

### [Acrylic Fiber]

The acrylic fiber is a fiber composed of a polymer containing acrylonitrile as a main component. Examples of the fiber composed of the polymer containing the acrylonitrile as the main component include an acrylic fiber and an acrylic-based fiber described below.

The acrylic fiber is preferably a fiber produced from a polymer or a copolymer containing 85% to 100% by weight of acrylonitrile and 0% to 15% by weight or less of an unsaturated vinyl-based monomer.

The acrylic-based fiber is also called a modacrylic fiber, and is a fiber produced from a copolymer containing 35% to 85% by weight of acrylonitrile and 15% to 65% by weight of an unsaturated vinyl monomer.

Examples of the unsaturated vinyl-based monomer copolymerizable with the acrylonitrile include acrylic acid esters (methyl acrylate, ethyl acrylate, and the like), methacrylic acid esters (methyl methacrylate, ethyl methacrylate, and the like), vinyl acetate, vinyl chloride, vinylidene chloride, styrene, acrylic acid and salts thereof, methacrylic acid and salts thereof, styrene sulfonic acid and salts thereof, and methacrylic sulfonic acid and salts thereof. Hereinafter, the acrylic fiber and the acrylic-based fiber are collectively referred to as an acrylic fiber.

The acrylic fiber may be composed of a single-component yarn, or may be a blended fiber, a commingled yarn, or a composite yarn with the polyester fiber and the like.

The amount of the acrylic fiber contained in the fiber product is preferably 50% by weight or less, more preferably 30% by weight or less, particularly preferably 5% to 20% by weight, based on a total weight of the fiber product.

### [Method for Recovering Polyester]

The method for recovering the polyester according to the present invention includes: a solvent contact step of bringing the fiber product into contact with an aprotic polar solvent at a temperature of 30°C to 160°C; and an acrylic fiber and dye removal step of removing, from the polyester fiber, the solvent and the acrylic fiber and the dye dissolved in the solvent from the fiber product to obtain the polyester.

Examples of the aprotic polar solvent include dimethyl sulfoxide, dimethylacetamide, dimethylformamide, acetone, acetonitrile, and diethyl ether. A boiling point of the aprotic polar solvent and a solubility of the acrylic fiber in the aprotic polar solvent are preferably high, and from this viewpoint, dimethyl sulfoxide, dimethylacetamide, and dimethylformamide are preferably used as the aprotic polar solvent, and dimethyl sulfoxide is particularly preferably used.

An amount of the aprotic polar solvent used in the solvent contact step is preferably 3 times to 1000 times, more preferably 5 times to 500 times, particularly preferably 8 times to 50 times the weight of the fiber product subjected to a solvent contact treatment.

The solvent contact treatment in which the fiber product is brought into contact with the aprotic polar solvent in the solvent contact step is preferably performed by immersing the fiber product in the aprotic polar solvent. This immersion treatment may be performed by allowing the fiber product to stand in the aprotic polar solvent, and is preferably performed by immersing the fiber product in the aprotic polar solvent and then stirring with a liquid flow circulation, a rotary blade, and the like.

The acrylic fiber and dye removal step is performed by deliquoring the aprotic polar solvent from the fiber product in which the aprotic polar solvent is absorbed between the fibers of the fiber product in the solvent contact treatment step. The deliquoring may be performed by a method such as squeezing, deliquoring by centrifugation, or Soxhlet extraction.

The solvent contact step and the removal step are preferably repeated. That is, it is preferable to alternately repeat the immersion treatment and the deliquoring treatment a plurality of times. Specifically, it is preferable to alternately repeat the immersion treatment and the deliquoring treatment 5 times or more, particularly preferably 6 times to 10 times.

The deliquoring step is performed such that the weight of the fiber product containing the aprotic polar solvent after the removal step is preferably 300% by weight or less, more preferably 150% to 250% by weight, particularly preferably 180% to 220% by weight with respect to 100% by weight of a dry weight of the fiber product.

By the method described above, the polyester can be recovered by dissolving an acrylic fiber component and a dye component in the aprotic polar solvent from the fiber product containing the polyester fiber and the acrylic fiber, and removing the solution.

In the polyester recovered by this method, the content of nitrogen derived from the acrylic fiber and the dye is preferably 15 ppm or less, more preferably 10 ppm or less. Therefore, the acrylic fiber and the dye can be mostly removed from the fiber product containing the polyester fiber colored with the dye and the acrylic fiber.

### [Method for Producing Recycled Polyester Polymer]

The method for producing the recycled polyester polymer according to another aspect of the present invention is a method for producing a recycled polyester polymer. The method includes: a depolymerization step of subjecting the polyester recovered by the method described above from a fiber product containing a polyester fiber colored with a dye and an acrylic fiber to a depolymerization reaction in an alkylene glycol to obtain a depolymerization reaction product; and a repolymerization step of subjecting the depolymerization reaction product to a polycondensation reaction to obtain a polyester polymer.

By this method, it is possible to obtain a recycled polyester polymer having a low yellowness and a high whiteness, in which coloration is limited to the same level as that of a generally produced polyester polymer.

### [Depolymerization Step]

In the depolymerization reaction of the depolymerization step, a catalyst is used. A first transition metal-based catalyst is preferably used as the catalyst. Specific examples thereof include fatty acid salts, carbonates, sulfates, phosphates, oxides, hydroxides, halides, and alcoholates of the first transition metal. Manganese and zinc are preferably used as the first transition metal.

As the catalyst, manganese oxide, manganese acetate, zinc oxide, and zinc acetate are preferably used, and manganese acetate is particularly preferably used. The catalyst may be used alone or in combination of two or more thereof. In particular, when manganese acetate is used as the catalyst, the solubility in alkylene glycol is high, and the amount of the catalyst remaining in the subsequent step can be reduced. The catalyst is preferably dissolved or suspended in the alkylene glycol in advance.

### [Alkylene Glycol]

As the alkylene glycol (hereinafter, may be abbreviated as AG), an alkylene glycol the same as a polyalcohol forming a skeleton structure of the polyester used in the fiber product, or the same as a polyalcohol constituting the polyester obtained by repolymerizing an aromatic dicarboxylic acid bis (hydroxyalkyl) in the intermediate is used.

Examples of the alkylene glycol, which is the same as the polyalcohol forming the skeleton structure of the polyester, include ethylene glycol (EG) when the polyester is polyethylene terephthalate (PET), 1,3-propanediol (trimethylene glycol, C3G) when the polyester is polytrimethylene terephthalate, and 1,4-butanediol (C4G) when the polyester is polybutylene terephthalate. The alkylene glycol may be a mixture of the alkylene glycols.

The amount of the alkylene glycol is preferably 2 times to 20 times, more preferably 3 times to 10 times, based on the weight of the polyester obtained by the recovery. As described above, by using a large amount of the alkylene glycol during the depolymerization and further performing crystallization and solid-liquid separation, a mixing amount of a depolymerization catalyst and other foreign substances can be reduced.

In general, the degree of discoloration of the depolymerized product of the polyester is often gradually increased due to long-term storage and the like, but the discoloration of those obtained by the recovery method and the production method according to the present invention is obviously small. In particular, when a manganese-based catalyst is used during depolymerization, a polyester polymer having small discoloration can be obtained.

The amount of the catalyst used during the depolymerization is preferably 20 mmol% to 500 mmol%, more preferably 30 mmol% to 300 mmol%, and particularly preferably 50 mmol% to 150 mmol% with respect to the polyester. Here, "mol%" indicates a ratio of the number of catalyst molecules to the constitutional unit of the polyester. "mmol%" is 1/1000 thereof. When the amount of the used catalyst is less than the above range, the catalytic activity is not sufficient, and when the amount is large, the effect of limiting the discoloration is reduced, which is not preferable. When the manganese-based catalyst is used as the catalyst, the depolymerization can be performed with a small amount of use.

### [Purification Step]

The method for producing the recycled polyester polymer according to the present invention preferably includes a purification step of purifying the depolymerization reaction product after the depolymerization step and before the repolymerization step.

The purification step is performed by cooling and crystallizing the depolymerization reaction product in the alkylene glycol. A temperature decrease condition for the crystallization is preferably decreased from a temperature of 60°C or higher to 25°C or lower, and more preferably cooled to 15°C or lower.

After the crystallization, the solid-liquid separation is preferably performed. The content of the alkylene glycol in a cake after the solid-liquid separation is preferably 100% by weight or less, more preferably 55% by weight or less, still more preferably 1% to 30% by weight, particularly preferably 5% to 25% by weight.

When the solid-liquid separation is performed after the crystallization, it is preferably cleaned with water or the alkylene glycol after the crystallization. The cleaning is preferably performed by treating with a Nutsche filter while spraying a cleaning liquid. By performing these treatments, the depolymerization catalyst dissolved in the alkylene glycol, other coloring causative substances, and the like are washed away, and an aromatic dicarboxylic acid bis (hydroxyalkyl) having a higher purification degree can be obtained.

As the solution used for cleaning, a solution having a low viscosity is preferably used, and water is preferably used from this viewpoint. The amount of the cleaning liquid is preferably 1 time to 100 times, more preferably 1.5 times to 10 times the weight of the cake. A liquid temperature during cleaning is 0°C to 40°C. When the liquid temperature is higher than this, the cake itself becomes easy to dissolve and the yield decreases, which is not preferable.

After the cleaning, the aromatic dicarboxylic acid bis (hydroxyalkyl) can be obtained by drying with a vacuum dryer and the like.

When the alkylene glycol used in the production method according to the present invention is the same as the diol component of the polyester after the repolymerization, the alkylene glycol is preferably repolymerized without being dried.

The obtained aromatic dicarboxylic acid bis (hydroxyalkyl) may be subjected to an adsorption treatment for foreign substances using an adsorbent such as activated carbon.

### [Intermediate Substance]

The polyester contained in the fiber product becomes an aromatic dicarboxylic acid bis (hydroxyalkyl) as an intermediate substance by the depolymerization step, and is used for producing the recycled polyester polymer.

The aromatic dicarboxylic acid bis (hydroxyalkyl) is different depending on the polyester or alkylene glycol used for the depolymerization. When a polyester (polyalkylene terephthalate) using a terephthalic acid as a polycarboxylic acid is mainly used as a raw material, a benzene dicarboxylic acid bis (hydroxyalkyl) (hereinafter, sometimes referred to as a bishydroxyalkyl terephthalate (BHAT)) is obtained.

Specifically, when 1,3-propanediol (trimethylene glycol) (C3G) is used as the alkylene glycol used for the depolymerization, bis-hydroxypropyl terephthalate (BHPT) is obtained. When 1,4-butanediol (C4G) is used as the alkylene glycol used for the depolymerization, bis-hydroxybutyl terephthalate (BHBT) is obtained. When ethylene glycol is used as the alkylene glycol used for the depolymerization, bishydroxyethyl terephthalate (BHET) is obtained.

### [Repolymerization Step]

The obtained aromatic dicarboxylic acid bis (hydroxyalkyl) becomes a recycled polyester polymer by a polycondensation reaction using a known method in the related art. The recycled polyester polymer obtained in the present invention is hardly colored and excellent in hue.

As the catalyst during the repolymerization for obtaining the recycled polyester polymer, for example, an antimony-based, germanium-based, or titanium-based catalyst can be used, and preferably a diantimony trioxide is used.

The alkylene glycol and the like generated during the repolymerization are preferably subjected to a polycondensation reaction while being removed from a reactor. The amount of the used catalyst is in a range of 10 ppm to 1000 ppm with respect to the weight of the aromatic dicarboxylic acid bis (hydroxyalkyl).

After polycondensation, a known phosphorus-based stabilizer in the related art, such as orthophosphoric acid and phosphorous acid, is preferably added. An amount of the used phosphorus-based stabilizer is preferably in a range of 1 ppm to 100 ppm with respect to the weight of the aromatic dicarboxylic acid bis (hydroxyalkyl).

### [Physical Properties of Recycled Polyester Polymer]

The recycled polyester polymer thus obtained has small discoloration such as yellowing. According to the method for recovering the polyester of the present invention, it is considered that a colored by-product is hardly generated, the catalyst is easily dissociated from the aromatic dicarboxylic acid bis (hydroxyalkyl) even in the subsequent step such as crystallization and the like, and hardly remains as an impurity. This effect is remarkable, particularly when the depolymerization is performed using a manganese-based catalyst at a low concentration.

In the recycled polyester polymer obtained in the present invention, the acrylic fiber is removed. When the polyester fiber in the fiber product is dyed, the dye is also removed.

The obtained recycled polyester polymer preferably has the following properties.

The obtained recycled polyester polymer has a b^{*} value of preferably 8 or less, more preferably 1 to -20, particularly preferably 0.5 to -15 as a hue of an L^{*}a^{*}b^{*} color space by a colorimeter in the International Commission on Illumination (CIE).

The obtained recycled polyester polymer has a yellowness (YI) of preferably 15 or less, more preferably 5 to -50, and still more preferably 0 to -20.

The obtained recycled polyester polymer has a whiteness (W) of preferably 75 or more, and more preferably 80 to 100.

The content of nitrogen derived from the acrylic fiber and the dye contained in the obtained recycled polyester polymer is preferably 15 ppm or less, and more preferably 10 ppm or less.

The obtained recycled polyester polymer has an intrinsic viscosity (IV) of preferably 0.30 dL/g to 1.50 dL/g, more preferably 0.40 dL/g to 1.30 dL/g, and particularly preferably 0.50 dL/g to 1.20 dL/g.

### Examples

Hereinafter, the present invention will be described more specifically with reference to Examples. Each value in Examples was obtained by the following method. "% owf" is an abbreviation for "% on the weight of fiber".

### 1) Hue (L^{*}a^{*}b^{*}, YI, W)

A sample (5 g) was pressed with two metal plates to form a plate-shaped sample, and then heated at 140°C for 2 hours to crystallize the sample to obtain a measurement sample. The values of the hues L^{*}, a^{*} and b^{*} of the measurement sample were measured according to JIS Z8781-4:2013 using a measurement device ("ZE-6000" manufactured by Nippon Denshoku Industries Co., Ltd.).

The yellowness (YI) was obtained by the following formula (1), and the whiteness (W) was obtained by the following formula (2).
Yellowness (YI): $0.34 - 71.7 \times a * / L * + 178.78 \times b * / L *$ (1)
Whiteness (W): $100 - \sqrt{\left\{{\left(100-L*\right)}^{2}+a{*}^{2}+b{*}^{2}\right\}}$ (2)

The higher the numerical value of the yellowness (YI), the stronger the yellowish, and the higher the numerical value of the whiteness (W), the whiter.

### 2) Content of Nitrogen (N)

The content of nitrogen was measured by a total nitrogen/protein analyzer (Nittoseiko Analytech Co., Ltd. DTN-300V).

### 3) Intrinsic Viscosity (IV)

0.12 g of a fiber (polymer) sample was dissolved in 10 mL of a tetrachloroethane/phenol mixed solvent (volume ratio: 1/1), and the intrinsic viscosity (dL/g) at 35°C was measured.

### 4) Glass Transition Point (Tg) and Melting Point (Tm)

The glass transition point (Tg) and the melting point (Tm) were measured according to ISO11357-3 and ASTM D3418 using a differential scanning calorimeter (DSC) manufactured by Seiko Electric Co., Ltd. In the measurement, the temperature was raised from the room temperature to 350°C at a temperature rising rate of 20°C/min, the polymer of the fiber was completely melted, then the temperature was lowered to 50°C at a temperature decrease rate of 10°C/min, a vertex of an endothermic peak obtained when the temperature was raised to 350°C at a temperature rising rate of 20°C/min was taken as a melting point, the endothermic peak of a mountain shape or a valley shape such as the melting point was not shown, and a central portion temperature of an endothermic curve showing a shoulder step in an endothermic direction was taken as a glass transition point.

### 5) Fineness, Intensity, Elongation, Fiber Length

A long fiber was measured by methods described in JIS L 1015:2021 8.3 and 8.5, and a short fiber was measured by methods described in JIS L 1015:2021 8.4, 8.5, and 8.7.

### [Example 1]

### (Recovery Step of Polyester)

A cloth made of 380 g of a polyethylene terephthalate (hereinafter, referred to as "PET") fiber colored (dyed) with a dye and 20 g of an acrylic fiber (hereinafter, sometimes referred to as "PAN") was prepared as a fiber product.

The PET fiber colored (dyed) with the dye is a long fiber having an IV = 0.60 dL/g, a Tg = 70°C, a Tm = 255°C, a fineness of 24 dtex, an intensity of 3.9 cN/dtex, and an elongation of 41%, and is a fiber dyed using 0.87% owf of an azo-based orange dye, 0.4% owf of an azo-based red dye, and 4.7% owf of an azo-based black dye as a disperse dye, and containing 0.38 wt% of nitrogen (N).

The PAN fiber has a fineness of 0.9 dtex, a fiber length of 38 mm, an intensity of 3.3 cN/dtex, and an elongation of 34%, which is manufactured by Nippon Exlan Co., Ltd., and nitrogen (N) content is 24% by weight.

400 g of the fiber product was put into a 5-liter separable flask, and 4000 g of dimethyl sulfoxide (DMSO) heated to an internal temperature of 105°C in another beaker was additionally put into the separable flask. While the fiber product was immersed in the dimethyl sulfoxide, the mixture was stirred for 30 minutes while the internal temperature was adjusted to 105°C (immersion treatment).

The fiber product was taken out from the separable flask and squeezed to remove the excess treatment liquid (liquid in which the dye and the acrylic fiber were dissolved in the dimethyl sulfoxide). The treatment liquid was colored, and the weight of the lightly decolorized fiber product after squeezing was 970 g.

After the completion of the squeezing, the fiber product was put into the separable flask again, and the same immersion in the dimethyl sulfoxide (DMSO) and the same squeezing treatment were alternately performed six times. In the visual observation, the fiber product was whitened by the third immersion and squeezing treatment, but also in the fourth and subsequent treatments, the treatment liquid after squeezing had a slight coloration, and the treatment liquid after squeezing was finally transparent in the sixth treatment.

The treated fiber product was dried at 80°C for 8 hours with a vacuum dryer to recover a polyester having a high whiteness.

### (Recycling Step of Polyester)

With respect to 300 parts by weight of the polyester recovered by the above method, 1500 parts by weight of ethylene glycol (EG) and 0.38 parts by weight (100 mmol% with respect to polyester) of manganese acetate as a depolymerization catalyst were put into a 2-liter separable flask, and sealed with nitrogen. At this time, the manganese acetate was previously dissolved in EG and then put into the 2-liter separable flask.

Thereafter, the separable flask containing the sample was set and heated to an internal temperature of 220°C by a mantle heater, and depolymerized at a normal pressure for 4 hours while stirring. The benzene dicarboxylic acid bis (hydroxyethyl) (BHET) solution after depolymerization was colorless and transparent, and no coloration was observed.

The solution after depolymerization was further filtered through a 200 µm mesh, a solid content remaining in the solution was removed, the temperature was gradually cooled to 70°C, while stirring and cooling, the temperature was decreased from 70°C to 40°C for an elapsed time of 0 minutes to 10 minutes, the temperature was decreased from 40°C to 30°C for an elapsed time of 10 minutes to 60 minutes, the temperature was decreased from 30°C to 15°C for an elapsed time of 60 minutes to 180 minutes, then the solution was stirred while the internal temperature was maintained at 15°C for 60 minutes, the internal temperature was lowered to precipitate crystals of BHET (4 hours in total), and BHET/EG slurry was obtained.

The BHET/EG slurry was subjected to the squeezing treatment by a filter press manufactured by Nihon Filter Co., Ltd., and solid-liquid separation of BHET and EG was performed. The separated BHET at this time contained 35% by weight of EG with respect to a weight of a cake recovered after the filter press. The cake after the EG separation was subjected to a water cleaning treatment with a Nutsche filter while spraying pure water twice the weight of the cake at 25°C. After the solid-liquid separation was completed, the BHET was dried in a vacuum dryer at 50°C for 8 hours to obtain dried BHET. The obtained BHET was white, and no foreign substances were mixed.

Thereafter, 254 parts by weight of the obtained dried BHET, 0.007 parts by weight of a phosphorus-based stabilizer, and 0.07 parts by weight of diantimony trioxide as a repolymerization catalyst were put into a reaction vessel under the normal pressure in a nitrogen atmosphere. Next, under conditions that the temperature in the reactor was set to 285°C and the pressure was reduced stepwise under the normal pressure for 10 minutes, a pressure of 4 kPa for 10 minutes, and further a pressure of 0.4 kPa for 40 minutes, a polycondensation reaction was performed while the ethylene glycol and the like generated in the reaction was distilled off outside the reactor to obtain a recycled polyester polymer.

Physical properties such as L^{*}a^{*}b^{*} values and nitrogen contents of the (fiber product) before the recovery treatment, the polyester after the recovery treatment and drying, and the recycled polyester after the repolymerization were shown in Table 1.

### [Example 2]

The same procedure as in Example 1 was performed except that the temperature of the immersion treatment for the fiber product in the dimethyl sulfoxide (DMSO) was changed from 105°C to 130°C. The color of the treatment liquid after the squeezing in the recovery step was a dark color as compared with Example 1, a precipitation observed as a PET dissolved material was confirmed in the treatment liquid, and the fiber product itself was a polyester cloth having a high whiteness.

The physical properties of the (fiber product) before the recovery treatment, the polyester after the recovery treatment and drying, and the recycled polyester after the repolymerization were shown in Table 1.

### [Example 3]

The same procedure as in Example 1 was performed except that the temperature of the immersion treatment in the dimethyl sulfoxide (DMSO) was changed from 105°C to 160°C. The weight of the recovered polyester was decreased, but the color of the residual liquid after the squeezing in the recovery step was a dark color as compared with Example 1, a precipitation observed as a PET dissolved material was confirmed in the residual liquid, and the fiber product itself was a polyester cloth having a high whiteness.

The physical properties of the (fiber product) before the recovery treatment, the polyester after the recovery treatment and drying, and the recycled polyester after the repolymerization were shown in Table 1.

### [Example 4]

The same procedure as in Example 1 was performed except that an undyed white cloth was used.

The physical properties of the (fiber product) before the recovery treatment, the polyester after the recovery treatment and drying, and the recycled polyester after the repolymerization were shown in Table 1.

**[Table 1]**

| | PAN/dye | Treatment liquid/ treatment temperature | | (Fiber product) before recovery treatment | Polyester after recovery treatment and drying | Recycled polyester |
|---|---|---|---|---|---|---|
| Example 1 | Present/ Present | DMSO/105°C | L*/a*/b* | 17.2/6.1/0.23 | 85.7/-0.05/1.9 | 92.2/-3.1/-3.9 |
| | | | YI | -22.7 | 4.3 | -4.8 |
| | | | W | 17.0 | 85.6 | 90.7 |
| | | | N (ppm) | 16864 | - | 9.9 |
| | | | IV (dl/g) | 0.60 (PET) | 0.60 | 0.56 |
| | | | Weight (g) | 400 | 360 | - |
| Example 2 | Present/ Present | DMSO/130°C | L*/a*/b* | 17.2/6.1/0.23 | 87.3/-0.26/3.0 | 87.8/-3.2/-8.9. |
| | | | YI | -22.7 | 6.7 | -15.2 |
| | | | W | 17.0 | 86.9 | 84.6 |
| | | | N (ppm) | 16864 | - | 11.2 |
| | | | IV (dl/g) | 0.60 (PET) | 0.59 | 0.56 |
| | | | Weight (g) | 400 | 360 | - |
| Example 3 | Present/ Present | DMSO/160°C | L*/a*/b* | 17.2/6.1/0.23 | 84.7/-0.07/1.5 | 80.5/0.6/5.3. |
| | | | YI | -22.7 | 3.6 | -16.6 |
| | | | W | 17.0 | 84.6 | 78.3 |
| | | | N (ppm) | 16864 | - | 15.3 |
| | | | IV (dl/g) | 0.60 (PET) | 0.59 | 0.57 |
| | | | Weight (g) | 400 | 180 | - |
| Example 4 | Present/ Absent | DMSO/105°C | L*/a*/b* | 79.2/-1.6/4.1 | - | 86.2/-2.0/-4.4 |
| | | | YI | 11.0 | - | -7.1 |
| | | | W | 78.7 | - | 85.4 |
| | | | N (ppm) | 13260 | - | ND |
| | | | IV (dl/g) | 0.62 (PET) | 0.62 | 0.64 |
| | | | Weight (g) | 400 | 361 | - |

### [Comparative Example 1]

The recovery treatment was performed in the same manner as in Example 1 except that the treatment temperature of the dimethyl sulfoxide (DMSO) was changed from 105°C to 25°C. No coloration was observed in the fiber product in the recovery step and the residual liquid after the squeezing.

The physical properties of the (fiber product) before the recovery treatment and the polyester after the recovery treatment and drying were shown in Table 2.

### [Comparative Example 2]

The recovery treatment was performed in the same manner as in Example 1 except that the treatment temperature of the dimethyl sulfoxide (DMSO) was changed from 105°C to 180°C. During the treatment step at 180°C, all the fiber products containing PET were dissolved in DMSO, and the product after the squeezing treatment could not be recovered.

The physical property of the (fiber product) before the recovery treatment was shown in Table 2.

### [Comparative Example 3]

The recovery treatment was performed in the same manner as in Example 1 except that the dimethyl sulfoxide (DMSO) was changed to benzyl alcohol (BA).

It was confirmed that during the recovery step, the PAN was discolored brown and most of the solid content of PAN remained even after the sixth treatment. The physical properties of the (fiber product) before the recovery treatment, the polyester after the recovery treatment and drying, and the recycled polyester after the repolymerization were shown in Table 2.

**[Table 2]**

| | PAN/dye | Treatment liquid/ treatment temperature | | (Fiber product) before recovery treatment | Polyester after recovery treatment and drying | Recycled polyester |
|---|---|---|---|---|---|---|
| Comparative Example 1 | Present/ Present | DMSO/25°C | L*/a*/b* | 17.2/6.1/0.23 | 20.4/0.7/-1.5 | - |
| | | | YI | -22.7 | -15.3 | - |
| | | | W | 17.0 | 20.4 | - |
| | | | N (ppm) | 16864 | - | - |
| | | | IV (dl/g) | 0.60 (PET) | - | - |
| | | | Weight (g) | 400 | 400 | - |
| Comparative Example 2 | Present/ Present | DMSO/180°C | L*/a*/b* | 17.2/6.1/0.23 | - | - |
| | | | YI | -22.7 | - | - |
| | | | W | 17.0 | - | - |
| | | | N (ppm) | 16864 | - | - |
| | | | IV (dl/g) | 0.60 (PET) | - | - |
| | | | Weight (g) | 400 | All dissolved | - |
| Comparative Example 3 | Present/ Present | BA/105°C | L*/a*/b* | 17.2/6.1/0.23 | - | 10.0/-0.2/5.7 |
| | | | YI | -22.7 | - | 103.7 |
| | | | W | 17.0 | - | 9.8 |
| | | | N (ppm) | 16864 | 809 | - |
| | | | IV (dl/g) | 0.60 (PET) | 0.62 | 0.95 |
| | | | Weight (g) | 400 | - | - |

### Industrial Applicability

The recycled polyester polymer obtained in the present invention can be used as a raw material for the fiber product. In addition, the recycled polyester polymer can be used as a raw material of a film and a resin, and also contributes to reducing an environmental load due to incineration of waste and discarding of waste to ocean, rivers, and the like.

## Claims

1. A method for recovering a polyester from a fiber product containing a polyester fiber colored with a dye and an acrylic fiber, the method comprising:
a solvent contact step of bringing the fiber product into contact with an aprotic polar solvent at a temperature of 30°C to 160°C; and
an acrylic fiber and dye removal step of removing, from the polyester fiber, the solvent and the acrylic fiber and the dye dissolved in the solvent from the fiber product to obtain the polyester.

2. The method for recovering a polyester according to claim 1, wherein
the aprotic polar solvent is at least one selected from the group consisting of dimethyl sulfoxide, dimethylacetamide, and dimethylformamide.

3. A method for producing a recycled polyester polymer from a fiber product containing a polyester fiber colored with a dye and an acrylic fiber, the method comprising:
a depolymerization step of subjecting the polyester recovered by the method according to claim 1 to a depolymerization reaction in an alkylene glycol to obtain a depolymerization reaction product; and
a repolymerization step of subjecting the depolymerization reaction product to a polycondensation reaction to obtain a polyester polymer.

4. The method for producing a recycled polyester polymer according to claim 3, further comprising:
a purification step of purifying the depolymerization reaction product after the depolymerization step and before the repolymerization step.
